# EUROPÄISCHE PATENTSCHRIFT

(11) **EP 1 172 584 B1**
(45) Veröffentlichungstag und Bekanntmachung des Hinweises auf die Patenterteilung: **04.12.2002**
(21) Anmeldenummer: 00112872.7
(22) Anmeldetag: 19.06.2000
(51) Int. Cl.: F16H 55/17, F16H 3/22

(54) **Schiebezahnradsatz**
Sliding gear set
Groupe de roues dentées coulissantes

(43) Veröffentlichungstag der Anmeldung: 16.01.2002
(73) Patentinhaber: Ford Global Technologies, Inc., A subsidiary of Ford Motor Company, Dearborn, Michigan 48126 (US)
(72) Erfinder: Adams, Thomas, 50733 Köln (DE); Adams, Gerd, 42799 Leichlingen (DE)
(74) Vertreter: Messulam, Alec Moses

(56) Entgegenhaltungen:
- EP-A- 0 547 632
- DE-A- 4 128 302

## Beschreibung

Die Erfindung bezieht sich auf einen Schiebezahnradsatz gemäß dem Oberbegriff des Anspruches 1.

In Schaltgetrieben für Kraftfahrzeuge werden Schiebezahnradsätze eingesetzt, wenn auf eine Synchronisierung verzichtet werden kann, z. B. beim Rückwärtsgang. Damit beim Einrücken die beiden Zahnräder sich nicht an ihren gegenüberliegenden Stirnflächen verhaken und damit das Einrücken blockiert ist, werden die gegenüberliegenden Stirnflächen der Zähne der beiden Zahnräder mit Anspitzungen versehen.

Aus der EP 05 47 632 ist ein Schiebezahnradsatz der im Oberbegriff erläuterten Art bekannt, bei der die an den Stimkanten der Zahnräder vorgesehenen Anspitzung oder Abdachung an jedem zweiten Zahn um ein axiales Maß so genormt sind und auch die Anspitzung oder Abdachung an zwei aufeinanderfolgenden Zähnen mit unterschiedlichen Winkeln ihrer Schneidenkante ausgebildet sind.

Dadurch kann es beim Einspuren des Schieberades nicht mehr zu einem das Einspuren sehr behindernden Doppelkontakt von zwei aufeinander folgenden Schneidenkanten kommen und der Einspurvorgang wird erleichtert. Nicht ausgeschlossen ist jedoch, dass zwei Schneidkanten gegenüberliegender Zähne aufeinanderstehen und dadurch die beiden Zahnräder nicht vollständig einrückbar sind, d. h. sie blockieren. In solch einem Fall muß der Einrückvorgang nochmals wiederholt werden. Dieser Schiebezahnradsatz verhindert ein Blockieren des Einrückens nicht sicher.

Die Aufgabe der vorliegenden Erfindung ist es demnach, das Einspuren des Schieberades so weit zu verbessern, dass möglichst eine Blockierrate von Null erreicht wird. Gemäss der Erfindung wird diese Aufgabe dadurch gelöst, indem an den dem zweiten Zahnrad gegenüberliegenden Stirnkanten der Zähne des ersten Zahnrades verdrehbare Elemente angeordnet sind.

Eine vorteilhafte Ausgestaltung sieht vor, dass die verdrehbaren Elemente an den Stirnkanten des ersten Zahnrades angeordnet sind, während die gegenüberliegenden Stirnkanten des zweiten Zahnrades Anspitzungen mit Schneidkanten aufweisen. Die verdrehbaren Elemente bewirken, dass, wenn die geometrische Stellung der beiden zueinander einzuspurenden Zahnräder so wäre, dass sie mit Schneidkanten an beiden Zahnrädem blockieren würden, die Schneidkante des zweiten Zahnrades am verdrehbaren Element des ersten Zahnrades abgleitet und dadurch das Zahnrad nicht beim Einrücken blockiert wird.

Die bei einem Kraftfahrzeuggetriebe bei laufendem Motor immer vorhandenen kleinsten Schwingungen bewirken, dass sich eine Schneidenkante nicht auf einem verdrehbaren Element hält. Beim geringsten Druck der Kante gegen das verdrehbare Element wird die Schneidenkante ausweichen, wodurch ein Blockieren des Einrückens sicher verhindert ist.

Bei Getrieben, die bei Maschinenstillstand geschaltet werden, können auch beide Zahnräder an ihren gegenüberliegenden Stimkanten der Zähne die verdrehbaren Elemente aufweisen. Das labile Gleichgewicht ist durch die Kugel /Kugel Paarung gegenüber der Kugel / Schneidenpaarung weiter destabilisiert, so dass trotz fehlender Betriebsschwingungen alleine aus der Einrückbewegung soviel Unruhe erzeugt wird, dass zwei gegenüberstehende Kugeln immer abgleiten und dadurch ein sicheres, blockadefreies Einrücken jederzeit gewährleistet ist.

Bei einer weiteren Ausführungsform sind verdrehbare Elemente nicht an allen Stimkanten der Zähne des ersten Zahnrades angeordnet. Durch einen entsprechenden Versatz der Stirnkanten der Zähne ohne verdrehbare Elemente an diesem Zahnrad ist gewährleistet, dass die Schneidkanten des zweiten Zahnrades immer zuerst in Kontakt mit einem verdrehbaren Element des ersten Zahnrades kommen und damit ein Blockieren verhindert wird.

Bei weiteren Ausführungen können die verdrehbaren Elemente teilweise oder ganz an den Stirnkanten der Zähne des ersten Zahnrades und teilweise oder ganz an den Stirnkanten der Zähne des zweiten Zahnrades angeordnet sein. In der vorteilhaften Ausgestaltung des Schiebezahnradsatzes sind die verdrehbaren Elemente Kugeln. Die drehbare Lagerung der Kugeln in den Stirnkanten der Zähne erfolgt durch geeignete Maßnahmen. Vorteil der Kugeln ist, dass sie unabhängig von der Art des Auftreffens einer Stimkante des anderen Zahnrades immer beweglich sind und damit ein sicheres Abgleiten, was gleichbedeutend einem blockadefreien Einrücken der Zahnräder ist, bewerkstelligen.

Weitere Ausführungsformen der verdrehbaren Elemente sind tonnenförmige Rollen oder Zylinderrollen, die in bzw. vor den Stimkanten der Zähne gelagert sind. Dabei können die Durchmesser der verdrehbaren Elemente abhängig von der Lagerung an den Stirnkanten von kleiner bis etwas größer der Zahndicke ausgeführt sein. Ist der Durchmesser kleiner, muß durch eine entsprechende Anfassung der Stirnkanten die Abgleitbewegung der Stimkanten des anderen Zahnrades gewährleistet sein.

Eine vorteilhafte Ausgestaltung der Lagerung der verdrehbaren Elemente in den Stimkanten der Zähne sieht vor, dass die Stimkanten Ausnehmungen aufweisen, in die die Kugeln bzw. Rollen drehbar eingelegt werden und durch Verstemmen des Stirnkantenmaterials gegen Herausfallen gesichert sind. Damit lässt sich einfach und kostengünstig ein Zahnrad mit den Kugeln bzw. Rollen an den Stirnkanten ausrüsten. Sind die Verstemmungen nur am Zahnfuß oder/und zum Zahnkopf hin ausgeführt, kann der Kugeldurchmesser die gleiche Größenordnung wie die Zahndicke aufweisen. Eine derart gesicherte Kugel oder Rolle kann nicht aus der Ausnehmung herausfallen, obwohl sie bündig zur Zahnflankenseite angeordnet ist.

Eine weitere Ausführung der Lagerung sieht vor, dass die verdrehbaren Elemente durch einen zusätzlichen Käfig drehbar gelagert vor den Stimkanten angeordnet sind. Dieser Käfig hält die Kugeln bzw. Rollen wie bei einem Kugellager in der entsprechenden Position vor den Stirnkanten der Zähne.

Die Erfindung wird nachfolgend anhand von Ausführungsbeispielen in Verbindung mit der Zeichnung im einzelnen erläutert. Es zeigen:
- Fig. 1: eine perspektivische Ansicht der Stimkanten eines Zahnrades;
- Fig. 2a - 2c: Frontansichten mit verschiedenen verdrehbaren Elementen;
- Fig. 3a, 3b: Querschnitte durch einen Zahnradzahn mit Lagerung der Kugel; und
- Fig. 4a - 4d: verschiedene Kombinationen verdrehbarer Elemente und Anspitzungen.

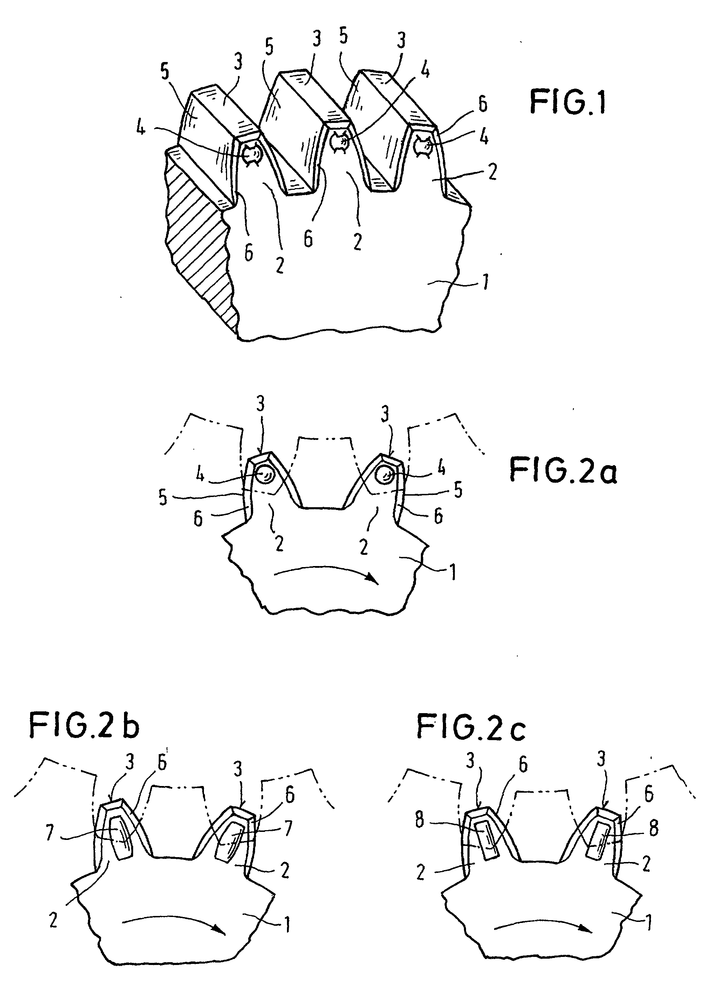

In Fig. 1 ist ein perspektivischer Ausschnitt aus dem Zahnrad 1 dargestellt. An den Stimkanten 2 der Zähne 3 sind die Kugeln 4 angeordnet. Für einen glatten Übergang von der Kugel 4 auf die Zahnflanke 5 des Zahnes 3 weist jeder Zahn 3 eine Anfasung 6 auf. Damit wird erreicht, dass beim Einrücken eines zweiten Zahnrades sich die Stimkanten des zweiten Zahnrades nicht mit den Stirnkanten 2 des Zahnrades 1 verhaken und das Einrücken blockiert wird.

Fig. 2a bis 2c zeigt verschiedene Ausführungsformen der verdrehbaren Elemente, die an den Stimkanten 2 der Zahnradzähne 3 angeordnet sind. Die Ausführungsform in Fig. 2a mit den Kugeln 5 entspricht der Darstellung in Fig. 1. In Fig. 2b sind die verdrehbaren Elemente als tonnenförmige Rollen 7 ausgebildet, in Fig. 2c als zylinderförmige Rollen 8. Eine Anfasung 6 zur Unterstützung des Abgleitens des anderen Zahnrades beim Einrücken ist in allen Fällen vorgesehen.

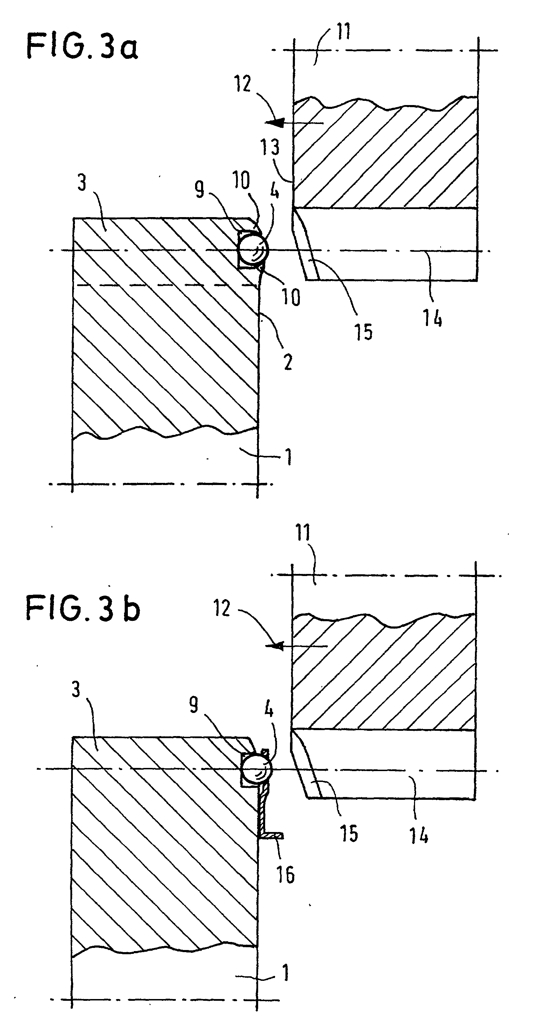

Fig. 3a zeigt einen Querschnitt durch den Zahn 3 des ersten Zahnrades 1. Die Kugel 4 sitzt drehbar gelagert in der Ausnehmung 9 des Zahnes 3. Gegen ein Herausfallen ist sie durch die Verstemmungen 10 an der Stirnfläche 2 des Zahnes 3 gesichert. Die Verstemmungen 10 aus dem Material der Stimkanten 2 des Zahnes 3 sind so ausgeführt, dass die Kugel 4 in der Aussparung 9 drehbar gelagert ist.

Weiterhin dargestellt ist das zweite Zahnrad 11, das als Schiebezahnrad in die Einrückbewegungsrichtung 12 verschiebbar ist. Die Stimkanten 13 des zweiten Zahnrades 11 weisen an den Zähnen 14 Anspitzungen 15 auf, die den Einrückvorgang unterstützen: Wenn die Stimkanten der Zähne 3 und 14 beim Einrücken genau gegenüberstehen, bewirkt die Anspitzung 15 ein Abgleiten an der Kugel 4. Ein Blockieren ist dadurch völlig ausgeschlossen, da die Paarung Anspitzung / Kugel ein sehr instabiles Gleichgewicht darstellt und es dadurch bei der geringsten Vibration oder Erschütterung zu einem Abgleiten der beiden Stimkanten 2 und 13 des ersten und zweiten Zahnrades kommt.

Eine weitere Ausführungsform der Lagerung der Kugel 4 im Zahnrad 1 ist in Fig. 3b dargestellt. Die Kugel 4 wird hier durch den Kugelkäfig 16 drehbar in der Aussparung 9 gehalten. Dabei kann bei entsprechender Ausgestaltung des Kugelkäfigs 16 auch völlig auf die Aussparung 9 verzichtet werden und die Einheit von Kugeln 4 und Kugelkäfig 16 beliebig am Zahnrad 1 montiert werden.

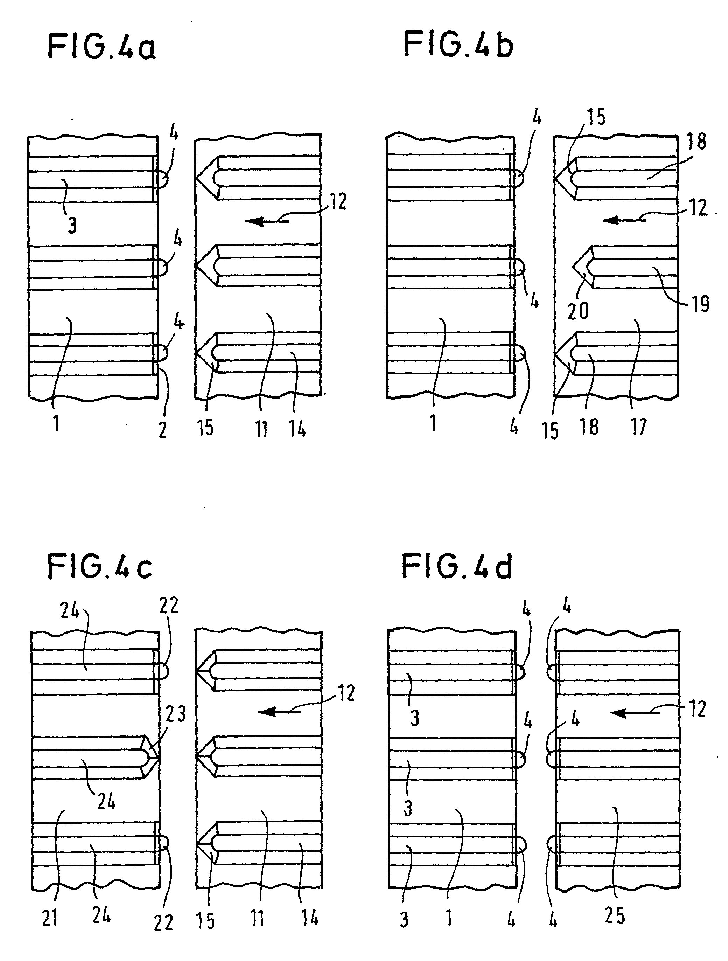

Die Figuren 4a bis 4d zeigen verschiedene Ausführungsformen von Zahnrädem mit verdrehbaren Elementen und Anspitzungen an den Stimkanten.

Das Zahnrad 1 in Fig. 4 a weist an den Stimkanten 2 eines jeden Zahnes 3 eine Kugel 4 auf. Demgegenüber steht das Zahnrad 11, das in Einrückrichtung 12 verschiebbar ist. Das Zahnrad 11 weist an jedem Zahn 14 eine Anspitzung 15 auf.

Fig. 4b zeigt eine Kombination des ersten Zahnrades 1 aus Fig. 4a mit einer weiteren Ausführung des zweiten Zahnrades 17. Abwechselnd sind die Anspitzungen 15 und 20 der Zähne 18 und 19 in Umfangsrichtung des Zahnrades gesehen versetzt angeordnet, wobei die Anspitzung 20 gegenüber der Anspitzung 15 zurückgesetzt ist. Eine solche Anordnung bietet dann Vorteile, wenn in bestimmten Einrückstellungen beide Anspitzungen 15 und 20 gleichzeitig auf zwei Kugeln 4 des ersten Zahnrades treffen würden. Dann wird das Abgleiten eindeutig durch die weiter vorstehende Anspitzung 15 bestimmt.

Fig. 4c zeigt eine Kombination, bei der das erste Zahnrad 21 abwechselnd Kugeln 22 und Anspitzungen 23 an den Stimkanten der Zähne 24 aufweist. Das zweite Zahnrad 11, das als Schiebezahnrad wieder in Einrückbewegungsrichtung 12 verschiebbar ist, weist an allen Zähnen 14 die Anspitzungen 15 auf. Eine solche Kombination von erstem und zweitem Zahnrad 21 und 11 ist zulässig, wenn aufgrund der Zahnradgeometrien keine Einrückstellung möglich ist, bei der zuerst die Anspitzung 23 auf die eine Anspitzung 15 treffen, sondern immer zuerst eine Anspitzung 15 auf eine Kugel 22. Wesentlicher Vorteil ist hier der Verzicht auf jede zweite Kugel im ersten Zahnrad und damit eine Reduzierung des Fertigungsaufwandes.

In Fig. 4 d ist die Kombination zweier Zahnrädem dargestellt, die beide an jedem Zahn über eine Kugel 4 verfügen. Eine solche Anordnung ist denkbar, wenn das zweite Zahnrad 25, das als Schieberad ausgeführt ist, bei völligem Maschinenstillstand geschaltet und der Einrückvorgang nicht durch Vibrationen unterstützt wird. Aufgrund der großen Instabilität einer Kugel zu Kugel Paarung werden die Zähne auf jeden Fall bei einem Einrückvorgang gegeneinander abgleiten.

## Patentansprüche

1. Schiebezahnradsatz mit einem ersten (1) und zweiten (11) drehbaren Zahnrad, von denen ein Zahnrad relativ zum anderen Zahnrad in kämmenden Eingriff einrückbar ist und jedes Zahnrad eine Vielzahl von Zähnen aufweist, die mit den passenden Zähnen des anderen Zahnrades kämmen können,
**dadurch gekennzeichnet, dass**
an den dem zweiten Zahnrad (11) gegenüberliegenden Stimkanten (2) der Zähne (3) des ersten Zahnrades (1) verdrehbare Elemente (4) angeordnet sind.

2. Schiebezahnradsatz nach Anspruch 1,
**dadurch gekennzeichnet, dass**
an den dem ersten Zahnrad gegenüberliegenden Stirnkanten der Zähne des zweiten Zahnrades verdrehbare Elemente angeordnet sind.

3. Schiebezahnradsatz nach Anspruch 1,
**dadurch gekennzeichnet, dass**
die den verdrehbaren Elementen (4) des ersten Zahnrades (1) gegenüberliegenden Stimkanten (13) der Zähne (14) des zweiten Zahnrades (11) Anspitzungen (15) aufweisen.

4. Schiebezahnradsatz nach Anspruch 1 oder 2,
**dadurch gekennzeichnet, dass**
verdrehbare Elemente nicht an allen Stimkanten der Zähne eines Zahnrades angeordnet sind.

5. Schiebezahnradsatz nach Anspruch 4,
**dadurch gekennzeichnet, dass**
an einem Zahnrad, welches verdrehbare Element aufweist, die Stirnkanten der Zähne ohne verdrehbare Elemente gegenüber den Stimkanten der Zähne mit verdrehbaren Elementen zurückgesetzt sind.

6. Schiebezahnradsatz nach Anspruch 3,
**dadurch gekennzeichnet, dass**
die Anspitzungen (15, 20) an den Stirnkanten der Zähne des zweiten Zahnrades (17) in Umfangsrichtung des Zahnrades gesehen abwechselnd in Richtung der Zahnflanken versetzt sind.

7. Schiebezahnradsatz nach Anspruch 1 oder 2,
**dadurch gekennzeichnet, dass**
verdrehbare Elemente als Kugeln ausgeführt sind.

8. Schiebezahnradsatz nach Anspruch 1 oder 2,
**dadurch gekennzeichnet, dass**
verdrehbare Elemente als tonnenförmige Rollen ausgeführt sind.

9. Schiebezahnradsatz nach Anspruch 1 oder 2,
**dadurch gekennzeichnet, dass**
verdrehbare Elemente als zylindrische Rollen ausgeführt sind.

10. Schiebezahnradsatz nach Anspruch 1 oder 2,
**dadurch gekennzeichnet, dass**
die verdrehbaren Elemente (4) in Ausnehmungen (9) in den Stirnkanten (2) drehbar gelagert sind und durch Verstemmungen (10) im Stirnkantenmaterial gegen Herausfallen gesichert sind.

11. Schiebezahnradsatz nach Anspruch 1 oder 2,
**dadurch gekennzeichnet, dass**
die verdrehbaren Elemente (10) mittels eines Lagerkäfigs (16) vor den Stirnkanten (2) der Zähne (3) drehbar gelagert angeordnet sind.

## Claims

1. Sliding gear set with a first (1) and second (11) rotatable toothed wheel, of which one toothed wheel can be engaged in an intermeshing way relative to the other toothed wheel and each toothed wheel has a multitude of teeth, which can intermesh with the corresponding teeth of the other toothed wheel,
**characterised in that**
on the side end edges (2) of the teeth (3) of the first toothed wheel (1) lying opposite the second toothed wheel (11) rotatable elements (4) are arranged.

2. Sliding gear set according to Claim 1
**characterised in that**
on the side end edges of the teeth of the second toothed wheel lying opposite the first toothed wheel rotatable elements are arranged.

3. Sliding gear set according to Claim 1
**characterised in that**
the side end edges (13) of the teeth (14) of the second toothed wheel (11) lying opposite the rotatable elements (4) of the first toothed wheel (1) have sharpened points (15).

4. Sliding gear set according to Claim 1 or 2
**characterised in that**
rotatable elements are not arranged on all side end edges of the teeth of a toothed wheel.

5. Sliding gear set according to Claim 4
**characterised in that**
on a toothed wheel, which has rotatable elements, the side end edges of the teeth without rotatable elements are set back in relation to the side end edges of the teeth with rotatable elements.

6. Sliding gear set according to Claim 3
**characterised in that**
the sharpened points (15, 20) on the side end edges of the teeth of the second toothed wheel (17) are arranged alternately in the circumferential direction of the toothed wheel, offset in the direction of the teeth flanks.

7. Sliding gear set according to Claim 1 or 2
**characterised in that**
rotatable elements are in the form of balls.

8. Sliding gear set according to Claim 1 or 2
**characterised in that**
rotatable elements are in the form of barrel-shaped rollers.

9. Sliding gear set according to Claim 1 or 2
**characterised in that**
rotatable elements are in the form of cylindrical rollers.

10. Sliding gear set according to Claim 1 or 2
**characterised in that**
the rotatable elements (4) are mounted in a rotatable way in recesses (9) in the side end edges (2) and are prevented from falling out by means of caulked areas (10) in the side end edge material.

11. Sliding gear set according to Claim 1 or 2
**characterised in that**
the rotatable elements (10) are mounted in a rotatable way by means of a bearing cage (16) in front of the side end edges (2) of the teeth (3).

## Revendications

1. Groupe de roues dentées coulissantes, avec une première (1) et une deuxième (11) roues dentées pivotantes ou mobiles sur un axe, dont une roue dentée peut être couplée par engrènement par rapport à l'autre roue dentée et chaque roue dentée présente une pluralité de dents qui s'engrènent avec les dents adaptées de l'autre roue dentée, **caractérisé en ce que** des éléments (4) pouvant être tournés sont disposés sur les arêtes frontales (2), opposées à la deuxième roue dentée (11), des dents de la première roue dentée (1).

2. Groupe de roues dentées coulissantes selon la revendication 1, **caractérisé en ce que** des éléments pouvant être tournés sont disposés sur les arêtes frontales, opposées à la première roue dentée, des dents de la deuxième roue dentée.

3. Groupe de roues dentées coulissantes selon la revendication 1, **caractérisé en ce que** les arêtes frontales (13), opposées aux éléments (4) pouvant être tournés de la première roue dentée (1), des dents (14) de la deuxième roue dentée (11) présentent des parties appointées (15).

4. Groupe de roues dentées coulissantes selon la revendication 1 ou 2, **caractérisé en ce que** des éléments pouvant être tournés ne sont pas disposés sur toutes les arêtes frontales des dents d'une roue dentée.

5. Groupe de roues dentées coulissantes selon la revendication 4, **caractérisé en ce que** sur une roue dentée qui présente des éléments pouvant être tournés, les arêtes frontales des dents sans éléments pouvant être tournés sont reculées par rapport aux arêtes frontales des dents avec des éléments pouvant être tournés.

6. Groupe de roues dentées coulissantes selon la revendication 3, **caractérisé en ce que** les parties appointées (15, 20) sur les arêtes frontales des dents de la deuxième roue dentée (17) sont décalées alternativement dans le sens des flancs de dent vu dans le sens périphérique de la roue dentée.

7. Groupe de roues dentées coulissantes selon la revendication 1 ou 2, **caractérisé en ce que** des éléments pouvant être tournés sont conçus comme des billes.

8. Groupe de roues dentées coulissantes selon la revendication 1 ou 2, **caractérisé en ce que** des éléments pouvant être tournés sont conçus comme des galets en forme de tonneau.

9. Groupe de roues dentées coulissantes selon la revendication 1 ou 2, **caractérisé en ce que** des éléments pouvant être tournés sont conçus comme des galets cylindriques.

10. Groupe de roues dentées coulissantes selon la revendication 1 ou 2, **caractérisé en ce que** les éléments (4) pouvant être tournés sont logés de façon pivotante dans des évidements (9) dans les arêtes frontales (2) et sont protégés contre une chute vers l'extérieur par des matages (10) pratiqués dans le matériau des arêtes frontales.

11. Groupe de roues dentées coulissantes selon la revendication 1 ou 2, **caractérisé en ce que** les éléments (10) pouvant être tournés sont disposés de façon à pouvoir pivoter au moyen d'une cage de palier (16) devant les arêtes frontales (2) des dents (3).
